# FASCICULE DE BREVET EUROPEEN

(11) **EP 1 388 697 B1**
(45) Date de publication et mention de la délivrance du brevet: **16.02.2005**
(21) Numéro de dépôt: 03291834.4
(22) Date de dépôt: 24.07.2003
(51) Int. Cl.: F16K 17/34, F16L 55/132

(54) **Dispositif de sécurité à déclenchement automatique**
Sicherheitsvorrichtung mit automatischer Auslösung
Safety device with automatic activation

(30) Priorité: 09.08.2002 FR 0210172
(43) Date de publication de la demande: 11.02.2004
(73) Titulaire: Gaz De France, 93211 Saint-Denis La Plaine Cédex (FR)
(72) Inventeur: Delprat, Cyrille, 75014 Paris (FR); Bouajaj, Lahouari, 92320 Châtillon (FR); Leme, David, 94140 Alfortville (FR); Pineau, Sylvain, 91230 Montgeron (FR)
(74) Mandataire: Rémont, Claude

(56) Documents cités:
- EP-A- 1 059 481
- US-A- 5 293 898
- US-A- 5 697 351
- US-A- 6 062 264
- PATENT ABSTRACTS OF JAPAN vol. 2002, no. 09, 4 septembre 2002 (2002-09-04) & JP 2002 156061 A (SAKAI YASUSADA;TAIRA MASAAKI), 31 mai 2002 (2002-05-31)

## Description

La présente invention concerne, de façon générale, les dispositifs du type représenté par les vannes de sécurité à déclenchement automatique utilisées dans les réseaux de distribution de gaz.

Plus précisément, l'invention concerne un dispositif de sécurité inséré dans une canalisation de fluide de section minimum déterminée pour la protéger contre un débit excessif du fluide qui y circule d'amont en aval, ce dispositif comprenant un tube présentant des extrémités amont et aval ouvertes et offrant au fluide une voie de circulation centrale, des moyens de retenue pour maintenir le tube en place dans la canalisation, et des moyens de contrôle de circulation de fluide incluant un clapet central, ce dispositif évoluant entre une configuration de repos, qu'il adopte en cas de débit normal du fluide et dans laquelle le clapet central libère la voie de circulation centrale, et une configuration de sécurité, qu'il adopte en cas de débit excessif du fluide et dans laquelle le clapet central obture la voie de circulation centrale, ce clapet central incluant lui-même un siège de clapet formé sur le tube, un obturateur central sélectivement appliqué sur le siège de clapet, et un ressort exerçant sur l'obturateur central une force élastique d'ouverture qui le sollicite à distance du siège de clapet, à l'encontre d'une force de fermeture exercée sur cet obturateur central par une perte de charge croissant avec le débit du fluide dans la canalisation.

Des dispositifs répondant à cette définition générique sont connus dans l'art antérieur, comme en témoignent par exemple les brevets US 2 926 690 et US 5 293 898.

Certains réseaux de distribution de fluides justifient des mesures de sécurité particulières, imposées par la nature du fluide transporté et par d'éventuels risques d'endommagement des conduites dont ces réseaux sont constitués.

Par exemple, les réseaux de distribution de gaz en zone urbaine s'étendent généralement sous les chaussées et les trottoirs, c'est-à-dire sous des ouvrages du domaine public susceptibles de faire l'objet d'interventions diverses, et notamment d'opérations de terrassement.

Or, si une conduite de gaz se trouve accidentellement arrachée ou sectionnée à l'occasion d'une telle opération, la fuite de gaz qui en résulte immédiatement fait apparaître un risque élevé d'incendie ou d'explosion.

Dans ce contexte, des vannes de sécurité ont été mises au point pour obturer les conduites de gaz dès qu'un débit de gaz anormalement élevé y est détecté.

A ce jour, les vannes de sécurité ne peuvent cependant être montées que sur des réseaux neufs en cours de construction, ou éventuellement sur des réseaux existants, mais à l'occasion seulement de leur rénovation.

En effet, dans la mesure où les conduites des réseaux existants peuvent avoir été construites à des époques différentes et suivant des normes différentes, où elles n'ont pas nécessairement des diamètres définis avec une très grande précision, où elles présentent sur leur longueur des obstacles, bavures, écrasements, restrictions, et / ou rayons de courbure variés, et où la mise en place d'une vanne de sécurité exige un ajustement parfait du corps de vanne à la conduite, l'insertion de vannes de sécurité dans les réseaux existants impose une intervention à l'endroit même de l'insertion, c'est-à-dire une excavation donnant accès au point choisi du réseau, une coupure de l'alimentation en fluide vers l'aval, et une adaptation locale du réseau à la vanne, au point d'insertion lui-même.

Ainsi, bien qu'il soit connu d'introduire dans un réseau en charge, notamment à des fins de détection, des dispositifs de taille limitée à travers un point d'accès sans avoir à intervenir de façon très lourde sur le réseau, cette technique, analogue au cathétérisme pour l'exploration médicale, est à ce jour très difficilement exploitable pour la pose de vannes de sécurité.

On connaît par ailleurs, par le document de brevet EP 1 059 481, une vanne de sécurité qui, à défaut de comprendre un tube et donc d'appartenir au type précédemment défini, comporte une chambre s'ouvrant en cas de débit excessif du fluide dans la canalisation et permettant le gonflage d'une enveloppe externe à la chambre et formant clapet.

Bien que cette vanne puisse être introduite dans un réseau existant et réponde donc au besoin précédemment évoqué, son fonctionnement repose sur des compromis techniques difficiles à concilier pour des fabrications en grande série.

L'invention, qui se situe dans ce contexte, a donc pour but de proposer un dispositif de sécurité susceptible d'être mis en place, sans excavation, dans un réseau par introduction au plus près d'une prise de branchement de ce réseau, et présentant un comportement fiable sans requérir l'emploi de matériaux présentant des propriétés physiques aux limites des possibilités techniques connues.

A cette fin, le dispositif de l'invention, par ailleurs conforme à la définition générique qu'en donne le préambule ci-dessus, est essentiellement caractérisé en ce que les moyens de contrôle de circulation de fluide comprennent en outre un obturateur annulaire élastiquement déformable, monté à la périphérie externe du tube, et radialement séparé de la canalisation, dans la configuration de repos du dispositif, par un espace annulaire offrant au fluide une voie de circulation périphérique, cet obturateur annulaire subissant, en cas de débit excessif du fluide, une expansion radiale par laquelle il est appliqué contre la canalisation et obture la voie de circulation périphérique.

Dans le mode de réalisation préféré de l'invention, le siège du clapet est porté par l'extrémité amont du . tube.

L'obturateur central est avantageusement solidaire d'une tige sur laquelle agit le ressort, cet obturateur central, la tige et le ressort pouvant alors aisément être disposés en amont du tube.

Par exemple, le dispositif de sécurité de l'invention comprend un corps creux disposé dans le prolongement du tube en amont de ce dernier, dans lequel sont logés la tige et le ressort, et qui présente une extrémité aval par rapport à laquelle coulisse l'obturateur central, le corps creux et le tube étant longitudinalement séparés l'un de l'autre par un espace longitudinal offrant au fluide un passage contrôlé par le clapet central et reliant l'extérieur du corps creux à l'intérieur du tube.

Dans ce cas, le ressort peut être interposé entre une butée interne du corps creux et une butée formée sur la tige, ce ressort travaillant en compression.

La perte de charge du fluide circulant dans la canalisation peut être réduite en prévoyant que l'obturateur central présente une pointe tournée vers le siège de clapet.

L'obturateur annulaire, qui est de préférence plus proche de l'extrémité aval du tube que de l'extrémité amont, présente par exemple une extrémité aval fixe par rapport au tube, et une extrémité amont sélectivement mobile sur le tube en cas de débit excessif de fluide, le déplacement vers l'aval de l'extrémité amont de l'obturateur annulaire provoquant un élargissement radial de cet obturateur annulaire.

Cet obturateur annulaire, avantageusement réalisé dans un matériau élastomère, peut par ailleurs être conformé en un soufflet présentant au moins un renflement radial.

Dans le mode de réalisation préféré de l'invention, l'obturateur annulaire est conformé en un soufflet présentant un renflement radial amont et un renflement radial aval, le renflement radial aval présentant au moins un passage d'air, par exemple offert par une rainure axiale, permettant d'évacuer vers l'aval le fluide présent dans le volume que délimitent entre eux les renflements radiaux.

Il peut en outre être judicieux de faire en sorte que, lors du passage du dispositif de sa configuration de repos à sa configuration de sécurité, l'obturateur central s'applique de façon réversible sur le siège de clapet tandis que l'obturateur annulaire s'applique de façon irréversible sur la canalisation.

Dans un mode de réalisation facile à mettre en oeuvre, les moyens de retenue comprennent par exemple une pluralité de griffes fixées à l'extrémité amont du corps creux et sollicitées par une force élastique vers une configuration de déploiement radial équivalente à celle des baleines d'un parapluie ouvert.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue latérale d'un dispositif conforme à l'invention, représenté dans sa configuration de repos, à l'intérieur d'une canalisation vue en coupe ;
- La figure 2 est une vue en coupe longitudinale du dispositif de la figure 1, observé suivant l'incidence définie par les flèches II-II de cette figure 1 ;
- La figure 3 est une reproduction agrandie d'un détail de la figure 2 ;
- La figure 4 est une vue semblable à celle de la figure 1, mais dans laquelle le dispositif est représenté dans sa configuration de sécurité ;
- La figure 5 est une vue en coupe longitudinale du . dispositif de la figure 4, observé suivant l'incidence définie par les flèches V-V de cette figure 4 ; et
- La figure 6 est une reproduction agrandie d'un détail de la figure 5.

Comme annoncé précédemment, l'invention concerne un dispositif de sécurité destiné à être inséré dans une canalisation K de fluide de section minimum S déterminée, et plus spécifiquement dans une canalisation de gaz dans l'application privilégiée de l'invention, pour protéger cette canalisation contre un débit excessif du fluide, et plus spécifiquement du gaz, qui y circule depuis une région amont X- vers une région aval X+.

De façon connue en soi, ce dispositif comprend essentiellement un tube 1, des moyens de retenue 2 pour maintenir le tube 1 en place dans la canalisation K, et des moyens de contrôle de circulation de fluide incluant un clapet central 3.

Le tube 1 est ouvert à ses extrémités amont 10 et aval 11, et offre ainsi spontanément au fluide une voie de circulation centrale CC (figure 2), contrôlée par le clapet central 3.

Dans ces conditions, le dispositif de l'invention peut évoluer entre une configuration de repos, qu'il adopte en cas de débit normal du fluide et dans laquelle le clapet central 3 libère la voie de circulation centrale CC, et une configuration de sécurité, qu'il adopte en cas de débit excessif du fluide et dans laquelle le clapet central 3 obture la voie de circulation centrale CC.

Le clapet central 3 est essentiellement constitué d'un siège de clapet 30 formé sur le tube 1, d'un obturateur central 31 qui s'applique sur le siège de clapet 30 en configuration de sécurité, et d'un ressort 32.

Le ressort 32 exerce sur l'obturateur central 31 une force élastique d'ouverture qui sollicite cet obturateur 31 à distance du siège de clapet 30, à l'encontre d'une force de fermeture exercée sur cet obturateur central 31 par une perte de charge subie, entre les régions directement en amont et en aval de l'obturateur central, par le fluide circulant dans la canalisation K.

Tant que le débit du fluide dans cette canalisation est normal, la force de fermeture est vaincue par la force exercée par le ressort 32, de sorte que l'obturateur central 31 est maintenu à distance du siège de clapet 30.

En revanche, dès que le débit du fluide dans la canalisation K devient excessif, la force exercée par le ressort 32 est vaincue par la force de fermeture exercée par la perte de charge, qui croît avec le débit, de sorte que l'obturateur central 31 est appliqué sur le siège de clapet 30.

Comme le comprendra aisément l'homme de métier au moins à la lecture de ce qui précède, la valeur limite du débit au-delà de laquelle ce débit est considéré comme excessif peut être ajustée par un réglage de la force de tarage du ressort 32.

Dans le dispositif de l'invention, les moyens de contrôle de circulation de fluide comprennent, en plus du clapet central 3, un obturateur annulaire 4 élastiquement déformable, qui est monté sur la périphérie externe du tube 1.

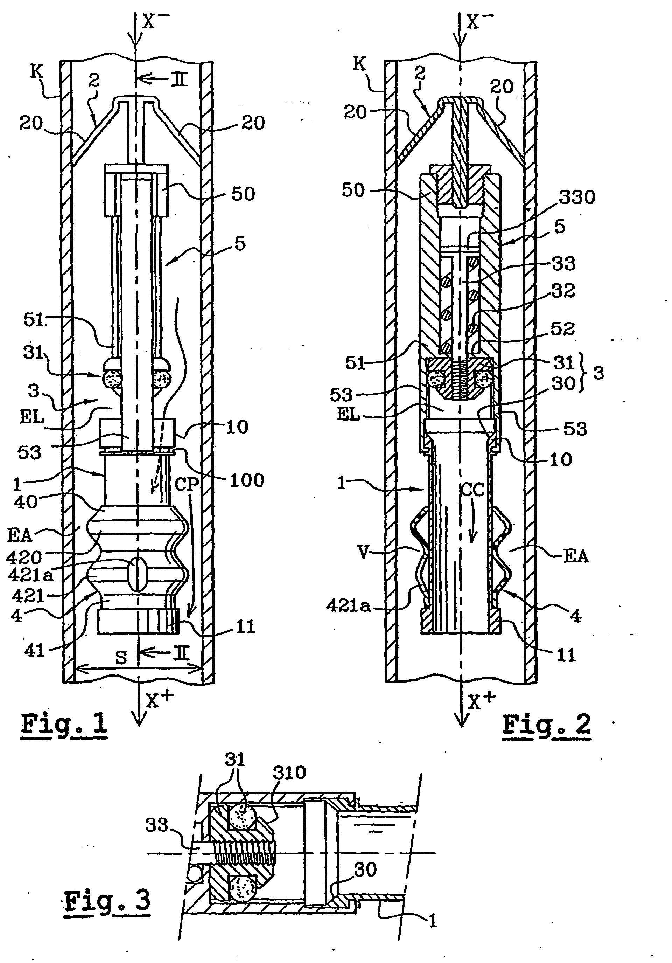

Dans la configuration de repos du dispositif, l'obturateur annulaire 4 est radialement séparé de la canalisation K par un espace annulaire EA (figure 1) qui offre au fluide une voie de circulation périphérique CP.

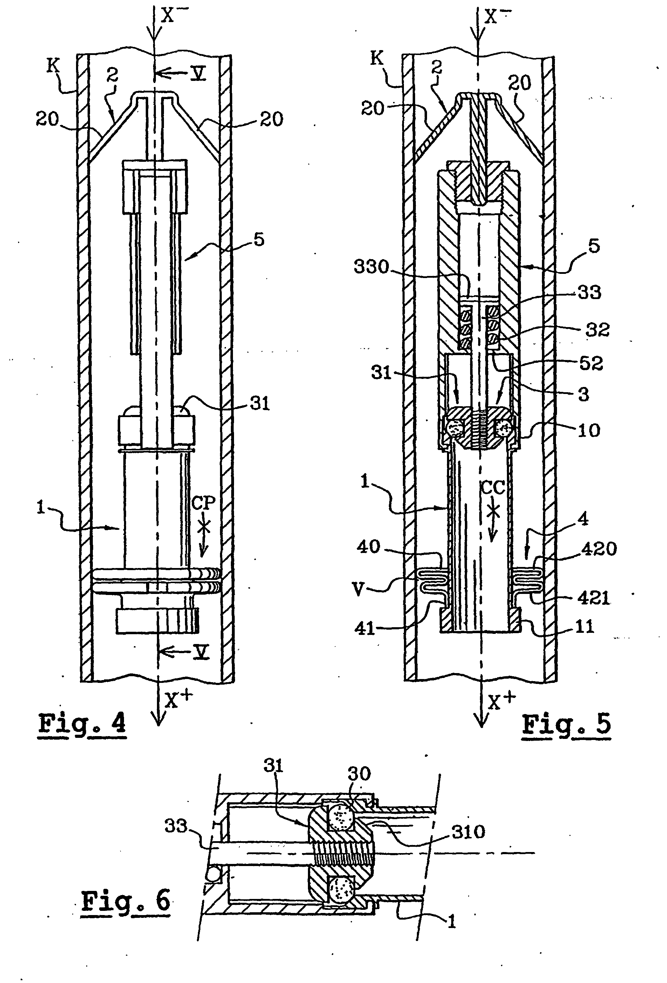

Cependant, dès que le débit du fluide dans la canalisation K devient excessif, l'obturateur annulaire 4 subit, en raison de l'importance de la perte de charge du fluide en mouvement, une expansion radiale par laquelle cet obturateur annulaire 4 est appliqué contre la canalisation K et obture la voie de circulation périphérique CP (figures 4 et 5).

En plus de cette caractéristique principale, le dispositif de sécurité de l'invention comprend d'autres caractéristiques qui renforcent de façon significative les avantages apportés par cette caractéristique principale.

En particulier, l'obturateur central 31 est fixé à l'extrémité aval d'une tige 33 sur laquelle agit le ressort 32, et cet obturateur central 31, ainsi que la tige 33 et le ressort 32, sont disposés en amont du tube 1 au lieu d'être insérés dans le tube comme c'est le cas pour les dispositifs décrits dans les brevets antérieurs US 2 926 690 et US 5 293 898 précités.

Grâce à cet agencement, la perte de charge du fluide traversant le tube 1 est réduite, ce tube pouvant donc, sans conséquence négative majeure, avoir une section transversale sensiblement inférieure à la section transversale minimum S de la canalisation K.

La tige 33 et le ressort 32 peuvent être logés et guidés dans un corps creux 5 qui est disposé en amont du tube 1 et dans son prolongement.

Par exemple, le ressort 32 est interposé entre une butée interne 52 du corps creux 5 et une butée 330 formée sur la tige 33, ce ressort 32 travaillant en compression, et l'obturateur central 31 coulissant par rapport à l'extrémité aval 51 du corps creux 5.

Pour pouvoir être fixé au tube 1, le corps creux 5 peut présenter, par exemple à son extrémité aval 51, des pattes flexibles 53 s'engageant élastiquement dans une rainure périphérique externe 100 du tube 1.

Comme le comprendra aisément l'homme de métier, le profil du corps creux 5 pourra être optimisé sur le plan aérodynamique et pourra notamment se rapprocher du profil d'un nez d'avion, de manière à minimiser les perturbations du flux de fluide et réduire ainsi les pertes de charge du dispositif.

Les moyens de retenue 2 prennent par exemple la forme d'une pluralité de griffes 20 qui sont fixées à l'extrémité amont 50 du corps creux 5 et qui sont sollicitées par une force élastique vers une configuration de déploiement radial, analogue à celle qu'adoptent les baleines d'un parapluie ouvert.

Comme le montre la figure 1, le corps creux 5 et le tube 1 sont longitudinalement séparés l'un de l'autre par un espace longitudinal EL qui offre au fluide circulant dans la canalisation K un passage que contrôle le clapet central 3 et qui relie l'extérieur du corps creux 5 à l'intérieur du tube 1.

Le siège du clapet 30 est avantageusement porté par l'extrémité amont 10 du tube 1, l'obturateur central 31 pouvant présenter une pointe 310 tournée vers le siège de clapet 30 pour réduire la perte de charge du fluide empruntant la voie de circulation centrale CC.

L'obturateur annulaire 4, qui est de préférence réalisé dans un matériau élastomère, est disposé à plus grande proximité de l'extrémité aval 11 du tube 1 que de l'extrémité amont 10 de ce tube.

L'extrémité aval 41 de l'obturateur annulaire 4 est fixe par rapport au tube 1, et bute par exemple sur un épaulement terminal du tube.

L'extrémité amont 40 de cet obturateur annulaire 4, qui est avantageusement conformé en soufflet, se déplace sur le tube 1 vers l'aval X+ en cas de débit excessif de fluide, cet obturateur 4 subissant, du fait de ce mouvement, un élargissement radial grâce auquel il vient s'appliquer sur la périphérie interne de la canalisation K (figures 4 et 5).

Comme le montrent les figures 1, 2, 4, et 5, l'obturateur annulaire 4 comporte de préférence un renflement radial amont 420 et un renflement radial aval 421.

Des expériences ont montré que l'obturation de la canalisation K par le renflement amont 420 pouvait être renforcée en prévoyant, sur le renflement radial aval 421, un ou plusieurs passages d'air, par exemple formés par autant de rainures axiales 421a, et permettant d'évacuer vers l'aval le fluide présent dans le volume V que délimitent entre eux les renflements radiaux 420 et 421.

Tel qu'il a été décrit, l'obturateur central 31 s'applique de façon réversible sur le siège de clapet 30 lorsque le dispositif de sécurité passe de sa configuration de repos à sa configuration de sécurité, ce comportement permettant d'éviter, lorsque le dispositif installé dans une canalisation K est passé de sa configuration de repos à sa configuration de sécurité, d'avoir à extraire ce dispositif de la canalisation K pour remettre cette dernière en service après sa réparation.

En revanche, il peut être judicieux de faire en sorte que l'obturateur annulaire 4 s'applique de façon irréversible sur la canalisation K lorsque le dispositif de sécurité passe de sa configuration de repos à sa configuration de sécurité, ce comportement pouvant être obtenu en réalisant l'obturateur annulaire 4 dans un matériau à haut facteur d'adhérence et à faible rigidité, permettant d'obtenir une étanchéité optimale dans la configuration de sécurité.

Pour la mise en place du dispositif dans une canalisation K, les griffes 20 doivent être repliées radialement vers le corps creux 5 pour permettre à ce dispositif de progresser dans cette canalisation malgré l'existence d'éventuelles restrictions de diamètre de cette canalisation, après quoi les griffes 20 sont autorisées à reprendre spontanément leur configuration déployée pour assurer l'ancrage de ce dispositif dans la canalisation.

Cette mise en place peut être réalisée, de façon connue en soi de l'homme de métier et décrite dans le document de brevet EP 1 059 481 précité, en plaçant le dispositif, en configuration repliée et comprimée, au moins en partie dans une douille portée à l'extrémité d'un jonc flexible, en poussant le jonc dans la canalisation jusqu'à ce que la douille atteigne . l'emplacement choisi pour l'implantation du dispositif, et en expulsant ce dernier de la douille par tout moyen approprié.

Compte tenu de la structure de l'obturateur annulaire et de la matière qui le compose, le dispositif peut être comprimé dans la douille jusqu'à présenter un diamètre fortement réduit facilitant la traversée des passages étroits de la canalisation, la force élastique radiale de constriction de l'obturateur annulaire par la douille suffisant en outre à garantir la cohésion mécanique de l'ensemble que forment la douille et ce dispositif.

## Revendications

1. Dispositif de sécurité inséré dans une canalisation de fluide (K) de section minimum déterminée pour la protéger contre un débit excessif du fluide qui y circule d'amont (X-) en aval (X+), ce dispositif comprenant un tube (1) présentant des extrémités amont et aval (10, 11) ouvertes et offrant au fluide une voie de circulation centrale (CC), des moyens de retenue (2) pour maintenir le tube (1) en place dans la canalisation (K), et des moyens de contrôle de circulation de fluide (3, 4) incluant un clapet central (3), ce dispositif évoluant entre une configuration de repos, qu'il adopte en cas de débit normal du fluide et dans laquelle le clapet central (3) libère la voie de circulation centrale (CC), et une configuration de sécurité, qu'il adopte en cas de débit excessif du fluide et dans laquelle le clapet central (3) obture la voie de circulation centrale (CC), ce clapet central (3) incluant lui-même un siège de clapet (30) formé sur le tube (1), un obturateur central (31) sélectivement appliqué sur le siège de clapet (30), et un ressort (32) exerçant sur l'obturateur central (31) une force élastique d'ouverture qui le sollicite à distance du siège de clapet (30), à l'encontre d'une force de fermeture exercée sur cet obturateur central (31) par une perte de charge croissant avec le débit du fluide dans la canalisation (K), **caractérisé en ce que** les moyens de contrôle de circulation de fluide (3, 4) comprennent en outre un obturateur annulaire (4) élastiquement déformable, monté à la périphérie externe du tube (1), et radialement séparé de la canalisation (K), dans la configuration de repos du dispositif, par un espace annulaire (EA) offrant au fluide une voie de circulation périphérique (CP), cet obturateur annulaire (4) subissant, en cas de débit excessif du fluide, une expansion radiale par laquelle il est appliqué contre la canalisation (K) et obture la voie de circulation périphérique (CP).

2. Dispositif de sécurité suivant la revendication 1, **caractérisé en ce que** le siège du clapet (30) est porté par l'extrémité amont (10) du tube (1).

3. Dispositif de sécurité suivant la revendication 1 ou 2, **caractérisé en ce que** l'obturateur central (31) est solidaire d'une tige (33) sur laquelle agit le ressort (32).

4. Dispositif de sécurité suivant la revendication 3, **caractérisé en ce que** l'obturateur central (31), la tige (33) et le ressort (32) sont disposés en amont du tube (1).

5. Dispositif de sécurité suivant la revendication 4, **caractérisé en ce qu'**il comprend un corps creux (5) disposé dans le prolongement du tube (1) en amont de ce dernier, dans lequel sont logés la tige (33) et le ressort (32), et qui présente une extrémité aval (51) par rapport à laquelle coulisse l'obturateur central (31), le corps creux (5) et le tube (1) étant longitudinalement séparés l'un de l'autre par un espace longitudinal (EL) offrant au fluide un passage contrôlé par le clapet central (3) et reliant l'extérieur du corps creux (5) à l'intérieur du tube (1).

6. Dispositif de sécurité suivant la revendication 5, **caractérisé en ce que** le ressort (32) est interposé entre une butée interne (52) du corps creux (5) et une butée (330) formée sur la tige (33), ce ressort (32) travaillant en compression.

7. Dispositif de sécurité suivant l'une quelconque des revendications précédentes, **caractérisé en ce que** l'obturateur central (31) présente une pointe (310) tournée vers le siège de clapet (30).

8. Dispositif de sécurité suivant l'une quelconque des revendications précédentes, **caractérisé en ce que** l'obturateur annulaire (4) est plus proche de l'extrémité aval (11) du tube que de l'extrémité amont (10).

9. Dispositif de sécurité suivant l'une quelconque des revendications précédentes, **caractérisé en ce que** l'obturateur annulaire (4) présente une extrémité aval (41) fixe par rapport au tube (1), et une extrémité amont (40) sélectivement mobile sur le tube (1) en cas de débit excessif de fluide, le déplacement vers l'aval de l'extrémité amont (40) de l'obturateur annulaire (4) provoquant un élargissement radial de cet obturateur annulaire (4).

10. Dispositif de sécurité suivant l'une quelconque des revendications précédentes, **caractérisé en ce que** l'obturateur annulaire (4) est réalisé dans un matériau élastomère.

11. Dispositif de sécurité suivant l'une quelconque des revendications précédentes, **caractérisé en ce que** l'obturateur annulaire (4) est conformé en un soufflet présentant au moins un renflement radial (420).

12. Dispositif de sécurité suivant l'une quelconque des revendications précédentes, **caractérisé en ce que** l'obturateur annulaire (4) est conformé en un soufflet présentant un renflement radial amont (420) et un renflement radial aval (421), le renflement radial aval (421) présentant au moins un passage d'air (421a) permettant d'évacuer vers l'aval le fluide présent dans le volume (V) que délimitent entre eux les renflements radiaux (420, 421).

13. Dispositif de sécurité suivant l'une quelconque des revendications précédentes, **caractérisé en ce que**, lors du passage du dispositif de sa configuration de repos à sa configuration de sécurité, l'obturateur central (31) s'applique de façon réversible sur le siège de clapet (30) tandis que l'obturateur annulaire (4) s'applique de façon irréversible sur la canalisation (K).

14. Dispositif de sécurité suivant l'une quelconque des revendications précédentes combinée à la revendication 5, **caractérisé en ce que** les moyens de retenue (2) comprennent une pluralité de griffes (20) fixées à l'extrémité amont (50) du corps creux (5) et sollicitées par une force élastique vers une configuration de déploiement radial équivalente à celle des baleines d'un parapluie ouvert.

## Patentansprüche

1. Sicherheitsvorrichtung, die in ein Fluidrohrleitungssystem (K) mit bestimmtem minimalen Querschnitt eingesetzt ist, um es gegen einen übergroßen Durchsatz an Fluid zu schützen, das von stromaufwärts (X-) nach stromabwärts (X+) zirkuliert, wobei diese Vorrichtung ein Rohr (1) aufweist, welches ein offenes oberstromiges und unterstromiges Ende (10, 11) aufweist, und welches dem Fluid einen zentralen Zirkulationsweg (CC) bietet, Rückhaltevorrichtungen (2), um das Rohr (1) in dem Rohrleitungssystem (K) an seinem Platz zu halten, und Vorrichtungen zur Steuerung der Fluidzirkulation (3, 4), welche ein zentrales Ventil (3) beinhalten, wobei diese Vorrichtung zwischen einer Ruhekonfiguration, die sie im Falle des normalen Durchsatzes des Fluids annimmt, und in welcher das zentrale Ventil (3) den zentralen Zirkulationsweg (CC) freigibt, und einer Sicherheitskonfiguration wechselt, die sie im Falle eines übermäßigen Durchsatzes des Fluids annimmt, und in welcher das zentrale Ventil (3) den zentralen Zirkulationsweg (CC) verschließt, wobei dieses zentrale Ventil (3) selbst einen auf dem Rohr (1) ausgebildeten Ventilsitz (30), eine selektiv auf den Ventilsitz (30) aufgelegte zentrale Verschlussvorrichtung (31) und eine Feder (32) beinhaltet, welche auf die zentrale Verschlussvorrichtung (31) eine elastische Öffnungskraft ausübt, die sie von dem Ventilsitz (30) wegspannt, und zwar entgegen einer Verschlusskraft, die von einem mit dem Durchsatz des Fluids in dem Rohrleitungssystem (K) wachsenden Druckverlust auf diese zentrale Verschlussvorrichtung (31) ausgeübt wird, **dadurch gekennzeichnet, dass** die Vorrichtungen zur Steuerung der Fluidzirkulation (3, 4) außerdem eine elastisch verformbare, ringförmige Verschlussvorrichtung (4) umfassen, die an dem Außenumfang des Rohrs (1) angebracht und in der Ruhekonfiguration der Vorrichtung durch einen ringförmigen Raum (EA), der dem Fluid einen Umfangszirkulationsweg (CP) bietet, radial getrennt von dem Rohrleitungssystem (K) ist, wobei diese ringförmige Verschlussvorrichtung (4) im Falle eines übergroßen Durchsatzes des Fluids eine radiale Ausdehnung erfährt, durch welche sie gegen das Rohrleitungssystem (K) gedrückt wird und sie den Umfangszirkulationsweg (CP) verschließt.

2. Sicherheitsvorrichtung gemäß Anspruch 1, **dadurch gekennzeichnet, dass** der Ventilsitz (30) von dem oberstromigen Ende (10) des Rohrs (1) getragen ist.

3. Sicherheitsvorrichtung gemäß Anspruch 1 oder 2, **dadurch gekennzeichnet, dass** die zentrale Verschlussvorrichtung (31) einstückig mit einer Stange (33) ausgebildet ist, auf welche die Feder (32) einwirkt.

4. Sicherheitsvorrichtung gemäß Anspruch 3, **dadurch gekennzeichnet, dass** die zentrale Verschlussvorrichtung (31), die Stange (33) und die Feder (32) stromaufwärts von dem Rohr (1) angeordnet sind.

5. Sicherheitsvorrichtung gemäß Anspruch 4, **dadurch gekennzeichnet, dass** sie einen Hohlkörper (5) umfasst, der in der Verlängerung des Rohrs (1) stromaufwärts von diesem letzteren angeordnet ist, und in welchem die Stange (33) und die Feder (32) gelagert sind, und der ein unterstromiges Ende (51) aufweist, bezüglich dessen die zentrale Verschlussvorrichtung (31) gleitet, wobei der Hohlkörper (5) und das Rohr (1) in Längsrichtung voneinander durch einen länglichen Raum (EL) getrennt sind, der dem Fluid einen von dem zentralen Ventil (3) kontrollierten Durchgang bietet, und der den Außenbereich des Hohlkörpers (5) mit dem Inneren des Rohrs (1) verbindet.

6. Sicherheitsvorrichtung gemäß Anspruch 5, **dadurch gekennzeichnet, dass** die Feder (32) zwischen einem inneren Anschlag (52) des Hohlkörpers (5) und einem auf der Stange (33) ausgebildeten Anschlag (330) angeordnet sein, wobei diese Feder (32) zusammengedrückt arbeitet.

7. Sicherheitsvorrichtung gemäß irgendeinem der vorherigen Ansprüche, **dadurch gekennzeichnet, dass** die zentrale Verschlussvorrichtung (31) eine zu dem Ventilsitz (30) hin gerichtete Spitze (310) aufweist.

8. Sicherheitsvorrichtung gemäß irgendeinem der vorherigen Ansprüche, **dadurch gekennzeichnet, dass** die ringförmige Verschlussvorrichtung (4) näher an dem unterstromigen Ende (11) des Rohrs angeordnet ist als an dem oberstromigen Ende (10).

9. Sicherheitsvorrichtung gemäß irgendeinem der vorherigen Ansprüche, **dadurch gekennzeichnet, dass** die ringförmige Verschlussvorrichtung (4) ein festes unterstromiges Ende (41) bezüglich des Rohrs (1) und ein selektiv auf dem Rohr (1) bewegliches oberstromiges Ende (40) für den Fall eines übermäßigen Durchsatzes an Fluid aufweist, wobei die Bewegung stromabwärts des oberstromigen Endes (40) der ringförmigen Verschlussvorrichtung (4) eine radiale Erweiterung dieser ringförmigen Verschlussvorrichtung (4) bewirkt.

10. Sicherheitsvorrichtung gemäß irgendeinem der vorherigen Ansprüche, **dadurch gekennzeichnet, dass** die ringförmige Verschlussvorrichtung (4) aus einem Elastomermaterial hergestellt ist.

11. Sicherheitsvorrichtung gemäß irgendeinem der vorherigen Ansprüche, **dadurch gekennzeichnet, dass** die ringförmige Verschlussvorrichtung (4) als Blasebalg ausgebildet ist, der zumindest eine radiale Verdickung (420) aufweist.

12. Sicherheitsvorrichtung gemäß irgendeinem der vorherigen Ansprüche, **dadurch gekennzeichnet, dass** die ringförmige Verschlussvorrichtung (4) als Blasebalg ausgebildet ist, der eine oberstromige, radiale Verdickung (420) und eine unterstromige, radiale Verdickung (421) aufweist, wobei die unterstromige, radiale Verdickung (421) zumindest einen Luftdurchgang (421a) aufweist, welcher ermöglicht, das Fluid stromabwärts abzuleiten, das sich in dem Raum (V) befindet, den die radialen Verdickungen (420, 421) zwischen sich begrenzen.

13. Sicherheitsvorrichtung gemäß irgendeinem der vorherigen Ansprüche, **dadurch gekennzeichnet, dass** sich die zentrale Verschlussvorrichtung (31) während des Übergangs der Vorrichtung aus ihrer Ruhekonfiguration in ihre Sicherheitskonfiguration reversibel auf den Ventilsitz (30) auflegt, während sich die ringförmige Verschlussvorrichtung (4) irreversibel auf das Rohrleitungssystem (K) auflegt.

14. Sicherheitsvorrichtung gemäß irgendeinem der vorherigen Ansprüche in Kombination mit Anspruch 5, **dadurch gekennzeichnet, dass** die Haltevorrichtungen (2) eine Vielzahl von an dem oberstromigen Ende (50) des Hohlkörpers (5) befestigten Haken (20) aufweist, die durch eine elastische Kraft in eine radiale Entfaltungskonfiguration gespannt sind, die derjenigen von Stäben eines offenen Regenschirms entspricht.

## Claims

1. Safety device inserted into a fluid pipeline (K) having a set minimal sectional area, said device protecting said pipeline it against excessive flow rates of fluid circulating in said pipeline from upstream (X-) to downstream (X+), said device comprising a tube (1) with open upstream and downstream ends (10, 11) and providing a central circulatory passage (CC) for the fluid, a retention device (2) to hold the tube (1) in place within the pipeline (K), and a fluid circulation regulator (3,4) comprising a central valve (3), said device changes between the rest configuration, which the device adopts in the event of a normal fluid flow rate and in which the central valve (3) frees the central circulatory passage (CC), and a safety configuration, which the device adopts in the event of an excessive fluid flow rate and in which the central valve (3) obstructs the central circulatory passage (CC), said central valve (3) comprising a valve seat (30) embedded in the tube (1), a central valve closure member (31) selectively applied to the valve seat (30), and a spring (32) exerting on the central valve closure member (31) an elastic opening force which opens the central valve closure member (31) by loss of head which increases with the flow rate of the fluid in the pipeline (K),
**characterized in that** said fluid circulation regulator (3,4) further comprises an annular valve closure member (4) which is elastically malleable, mounted to an external periphery of the tube (1), and separated radially from the pipeline (K), in the rest configuration of the device, by an annulus (EA) providing the fluid with a peripheral circulatory passage (CP), said annular valve closure member (4) being subject to, in the event of excessive flow rate of the fluid, a radial expansion by which it is pressed against the pipeline (K) and obstructs the peripheral circulatory passage (CP).

2. Safety device according to claim 1, **characterised in that** the valve seat (30) is supported by the downstream end (10) of the tube (1).

3. Safety device according to claims 1 or 2, **characterised in that** the central valve closure member (31) is integral to a valve rod (33) on which the spring (32) acts.

4. Safety device according to claim 3, **characterised in that** the central valve closure member (31), the valve rod (33) and the spring (32) are placed upstream from the tube (1).

5. Safety device according to claim 4, **characterised in that** it comprises a hollow body (5) placed in line with the tube (1) upstream from the latter, in which the valve rod (33) and the spring (32) are housed, and which has a downstream end (51) in relation to which the central valve closure member (31), the hollow body (5) and the tube (1) being longitudinally separated one from the other by a longitudinal space (EL) providing the fluid with a passage regulated by the central valve (3) and linking the exterior of the hollow body (5) to the interior of the tube (1).

6. Safety device according to claim 5, **characterised in that** the spring (32) is interposed between an internal abutment (52) of the hollow body (5) and an abutment (330) on the valve rod (33), this spring (32) working under compression.

7. Safety device according to one of the previous claims, **characterised in that** the central valve closure member (31) has a point (310) turned towards the valve seat (30).

8. Safety device according to one of the previous claims, **characterised in that** the annular valve closure member (4) is closer to the downstream end (11) of the tube (1) than to the upstream end (10).

9. Safety device according to one of the previous claims, **characterised in that** the annular valve closure member (4) has a fixed downstream end (41) in relation to the tube (1), and an upstream end (40), selectively movable along the tube (1) in the event of an excessive fluid flow rate, the downstream movement of the upstream end (40) of the annular valve closure member (4) provoking a radial widening of this annular valve closure member (4).

10. Safety device according to one of the previous claims, **characterised in that** the annular valve closure member (4) is made in an elastomer material.

11. Safety device according to one of the previous claims, **characterised in that** the annular valve closure member (4) is shaped as a bellows seal that bears at least one radial bulge (420).

12. Safety device according to one of the previous claims, **characterised in that** the annular valve closure member (4) is shaped as a bellows seal that bears at least one radial bulge (420) and a downstream radial bulge (421), the downstream radial bulge (421) having at least one air flow path (421a) allowing the downstream evacuation of the fluid present in the volume (V) delimited by the radial bulges (420, 421).

13. Safety device according to one of the previous claims, **characterised in that**, when the device changes from its rest configuration to its safety configuration, the central valve closure member (31) applies in a reversible manner to the valve seat (30) whereas the annular valve closure member (4) applies in an irreversible manner to the pipeline (K).

14. Safety device according to one of the previous claims combined with claim 5, **characterised in that** the retention means (2) comprise multiple claws (20) fixed to the upstream end (50) of the hollow body (5) and solicited by an elastic force towards a radial deployment configuration equivalent to that of the spokes of an open umbrella.
